# EUROPEAN PATENT SPECIFICATION

(11) **EP 2 033 524 B1**
(45) Date of publication and mention of the grant of the patent: **27.05.2015**
(21) Application number: 07744368.7
(22) Date of filing: 30.05.2007
(51) Int. Cl.: A23B 4/044, A23L 1/314, A23B 4/052, A23L 1/232, A23L 1/325, A23L 1/317

(54) **METHOD AND APPARATUS FOR MODIFYING SMOKE SMELL AND METHOD AND APPARATUS FOR PRODUCING SMOKED FOOD**
VERFAHREN UND VORRICHTUNG ZUR MODIFIZIERUNG VON RAUCHGERUCH UND VERFAHREN UND VORRICHTUNG ZUR HERSTELLUNG VON GERÄUCHERTEN LEBENSMITTELN
PROCÉDÉ ET APPAREIL PERMETTANT DE MODIFIER L'ODEUR DE FUMÉE ET PROCÉDÉ ET APPAREIL PERMETTANT DE PRODUIRE DES PRODUITS ALIMENTAIRES FUMÉS

(30) Priority: 07.06.2006 JP 2006158700; 07.02.2007 JP 2007027961
(43) Date of publication of application: 11.03.2009
(73) Proprietor: Ajinomoto Co., Inc., Tokyo 104-8315 (JP)
(72) Inventor: FUJIE, Masaaki, Kawasaki-shi Kanagawa 210-8681 (JP); KAWAGUCHI, Hirokazu, Kawasaki-shi Kanagawa 210-8681 (JP); HARADA, Shundo, Kawasaki-shi Kanagawa 210-8681 (JP); IZUMI, Masaaki, Kawasaki-shi Kanagawa 210-8681 (JP); NAGASHIMA, Kenichi, Kawasaki-shi Kanagawa 210-8681 (JP); SAKAMOTO, Tomohiro, Kawasaki-shi Kanagawa 210-8681 (JP)
(74) Representative: Strehl Schübel-Hopf & Partner
(86) International application number: PCT/JP2007/060949
(87) International publication number: WO 2007/142086

(56) References cited:
- GB-A- 120 964
- GB-A- 397 971
- JP-A- 7 050 987
- JP-A- 02 255 039
- JP-A- 07 050 986
- JP-A- 08 103 210
- JP-A- 11 241 883
- JP-A- 11 241 883
- JP-A- 62 069 965
- JP-A- 2005 046 109

## Description

### TECHNICAL FIELD

The present invention relates to a method for controlling the quality of smoke; and a process for producing a smoked food capable of imparting a favorable flavor to a food and reducing toxic components such as benzopyrene. Further, the present invention relates to a process for producing a dried and smoked fish product efficiently in a short time, more particularly, it relates to a process for producing a dried and smoked fish product capable of drying a fish in a short time without generating a fishy smell and imparting a favorable smoke flavor in a short time, which is obtained by subjecting the smoke to a secondary treatment.

### BACKGROUND ART

The purpose of smoking of fish, sausage, ham and other foods is originally for increasing the shelf life thereof. However, at present when a food preservation technique has been developed, a main purpose of smoking is to impart a favorable flavor thereto. Therefore, it becomes very important to control the quality of smoke which makes up a major part of flavor of smoked food.

In a conventional smoking method, smoke is generated by combustion, incomplete combustion, or thermal decomposition of such as chips obtained by crushing firewood or a wood material (see, for example, Non-patent document 1: "Kunsei Shokuhin (Smoked Foods)" written by Shizuyuki Ota, Koseisya Koseikaku, pages 31-34). As one example of smoked foods, a dried and smoked fish such as dried and smoked bonito, dried and smoked mackerel or dried and smoked tuna is known. As a production process for them, for example, a process for producing dried and smoked bonito is as follows. The head and internal organs of bonito are removed and the shape thereof is arranged, and then, the bonito fillet is boiled. Then, smoke is generated by combustion of hardwood such as oak or Japanese chestnut oak, and the boiled bonito fillet is subjected to a step called "Baikan (smoking and drying)" in which a flavor is stuck to the surface thereof. The resulting dried and smoked fish in a state in which smoke is attached to the surface thereof in this way without being subjected to a secondary process is referred to as "Arabushi". Then, the surface of Arabushi is shaved off to remove a tar component, whereby "Hadakabushi" is produced. Alternatively, after shaving off the surface thereof, the flavor thereof is modified by a secondary process of attaching molds thereto, whereby "Karebushi" is produced.

Also with respect to smoke components, various studies have been carried out. It is considered that important properties thereof are an antibacterial property, an antioxidative property, and a flavor component which contributes to a smoked food. In particular, as a component which is most closely related to the flavor of a smoked food, guaiacol, 4-methylguaiacol, and phenols such as 2,6-dimethoxyphenol can be exemplified, and in addition to these, carbonyl compounds and acids are included. These smoke components penetrate into food, a complex is formed by reacting the smoke components with food components, and further, modification of food components takes place during the smoking step, whereby a unique flavor of a smoked food is formed. However, in a conventional method for generating smoke, in a case where the same type of smoking material was used, it was difficult to delicately control the quality of a flavor of a smoked food because the quality of smoke was almost determined by the combustion condition of smoking material and the temperature of thermal decomposition.

Further, it is known that when the temperature of the thermal decomposition is 425°C or higher, it begins to generate toxic ingredients such as 3,4-benzopyrene (see, for example, Patent document 1: JP-P2002-58420A and Non-patent document 2: "Sumoku Shokuhin (Smoked Foods)" written by Shizuyuki Ota et al., Koseisya Koseikaku, pages 141-144), and there are quite a few concerns about an effect on a human body when these smoked foods are taken in a large amount at a time or constantly.

As an industrial method for generating smoke, there is a method in which a smoke generating unit attached to a smoking device or the like is used, and in addition to this, there is also a method in which smoke generated upon carbonization of a wood material in such as a carbonizing device is utilized (see, for example, Patent document 2: JP-P2003-105341A (Page 5, Fig. 6)).

A case has been reported in which smoke generated by combustion, incomplete combustion, or thermal decomposition is made odorless by combustion thereof when it is discharged (see, for example, Patent document 3: JP-P2000-310406A (Page 6, Fig. 1)). Further, in a biomass fuel gasification field, a case has been reported, in which the gas is modified into a component suitable for combustion by adding heat or water vapor to a pyrolysis gas (see, for example, Patent document 4: JP-P2002-69461A).

The "Baikan (smoking and drying) step" in the process for producing a dried and smoked fish is changed from a method in which smoking is carried out by direct firing called Tebiyama method to a method in which smoking is indirectly carried out called Kyuzokko method or Yaizu method, and large-scale production and labor saving have been advanced (see, for example, Non-patent document 3: "Katsuobushi (Dried and Smoked Bonito) ", written by Syun Wada, Sachi Shobo, pages 33-35). In the Baikan step, after the Baikan step is carried out in a furnace, combustion using firewood is stopped, and in order to achieve uniform drying of bonito fillet, a step called "Anjou (letting the bonito fillet stand so as to allow the water inside the fillet to move toward the surface) " is carried out. However, because this Anjou step takes a long period of time, the entire Baikan step requires generally 10 days or more, and in a case where it takes long, 1 month or more is required in some cases. Due to this, a method has been reported, in which drying is carrying out continuously by controlling the temperature and humidity without resort to the Anjou step to reduce the drying time (see, for example, Non-patent document 4: "Katsuobushi-rui no Baikan Kotei no Kaizen ni kansuru Kenkyu (Dai-ni-ho) Katsuobushi-rui no Renzoku Kanso no tameno Moderu Jikken (Study of Improvement of Baikan step for Dried and Smoked Bonito, (II) Model Experiment for Continuous Drying of Dried and Smoked Bonito)", written by Masato Ishikawa, Masayoshi Motosugi, Shingo Doi, Journal of food science and technology, No. 22, Vol. 6, June, 1975, pages 1-6).

Further, there is a method in which the bonito fillet after boiling is formed into flakes with an appropriate size and dried and smoked bonito flakes with a well-balanced flavor are produced in a short time (see, for example, Patent document 5: JP-A-2005-58003). Further, a Baikan method and a device for dried and smoked bonito has been reported, in which a drying and smoking step is divided into the respective steps, and after smoking is carried out under an appropriate condition, drying is carried out, whereby the production time is reduced (see, for example, Patent document 6: JP-A-7-50986).
[Patent Document 1] JP-P2002-58420A
[Patent Document 2] JP-P2003-105341A
[Patent document 3] JP-P2000-310406A
[Patent document 4] JP-P2002-69461A
[Patent document 5] JP-P2005-58003A
[Patent document 6] JP-A-7-50986
[Non-patent document 1] "Kunsei Shokuhin (Smoked Foods)" written by Shizuyuki Ota, Koseisya Koseikaku, pages 31-34
[Non-patent document 2] "Sumoku Shokuhin (Smoked Foods)" written by Shizuyuki Ota et al., Koseisya Koseikaku, pages 141-144
[Non-patent document 3] "Katsuobushi (Dried and Smoked Bonito)", written by Shun Wada, Sachi Shobo, pages 33-35
[Non-patent document 4] "Katsuobushi-rui no Baikan Kotei no Kaizen ni kansuru Kenkyu (Dai-ni-ho) Katsuobushi-rui no Renzoku Kanso no tameno Moderu Jikken (Study of Improvement of Baikan step for Dried and smoked bonito (II) Model Experiment for Continuous Drying of Dried and Smoked Bonito)", written by Masato Ishikawa, Masayoshi Motosugi, Shingo Doi, Journal of Food Science and Technology, No. 22, Vol. 6, June, 1975, pages 1-6

GB 397 971 A discloses a method for producing smoked food comprising generating smoke by combustion of a plant material and heating said smoke with a secondary heater, and a food produced by said method.

JP 7 050987 A discloses a method for producing smoked food comprising generating smoke by combustion of a plant material and heating said smoke with a secondary heater and contacting the smoke or an effective ingredient thereof after secondary heating with a food, and a food produced by said method.

GB 120 964 A discloses a method for producing smoked food comprising generating smoke by combustion of a plant material and heating said smoke with a secondary heater and contacting the smoke or an effective ingredient thereof after secondary heating with a food, and a food produced by said method.

JP 11 241883 discloses a method for improving a flavor of smoke comprising generating smoke by combustion of a plant material and heating said smoke with a secondary heater.

JP 62 069965 A discloses a dried and smoked bonito extract which is extracted and separated from ground powder obtained by grinding and form adjusting of coarse dried bonito in producing dried bonito with carbon dioxide as an extracting agent.

### DISCLOSURE OF THE INVENTION

### PROBLEMS TO BE SOLVED BY THE INVENTION

The qualities of a flavor of a smoked food depend on the methods and conditions of combustion or thermal decomposition and the types of smoking material. In a case where drying and smoking are simultaneously carried out by combustion of firewood like the production of dried and smoked bonito, a stimulating smoke flavor is imparted. In another case where smoking is carried out by attaching the smoke to a processed food while smoking with the incomplete combustion of a smoking material to produce cheese, ham or sausage, a sweet and mild smoke flavor is imparted. Improvement of the flavor after smoking is carried out by attachment of molds in the case of dried and smoked bonito, and by addition of a ripening step in the case of cheese, ham or sausage. In this way, it is possible to control the quality of a flavor to some extent by a condition, however, in particular, in the secondary process of attachment of molds in the case of dried and smoked bonito there is a problem that it takes several weeks to several months.

Further, by changing the types of smoking material, it is possible to impart a unique flavor to a food material, which is derived from the smoking material. However, there is a case in which the smoking material is incompatible with a food material, or it is difficult in some cases to obtain a large amount of smoking materials such as cherry tree or white oak, therefore, there is a problem that the smoking is not suitable for industrial large-scale production.

In the conventional Baikan method in which smoke and heat are obtained by combustion of firewood, drying and smoking are carried out simultaneously, therefore, both optimal conditions for drying and smoking cannot be satisfied simultaneously. For example, when drying precedes smoking and the temperature is raised, combustion of firewood proceeds too much and the amount of generated smoke becomes small. When smoking precedes drying and the amount of generated smoke is increased, combustion of firewood proceeds less and the temperature is not raised and the drying speed becomes slow. Further, in order to facilitate drying, it is necessary to discharge the water vapor from the atmosphere. However, at this time, fresh air enters therein and the smoke density becomes low, therefore, the efficiency of smoking is lowered.

Further, it is difficult to control the temperature during drying and smoking steps by combustion of firewood, therefore, it cannot be avoided that a difference in the temperature of several tens of degrees occurs in some places in a chamber for the Baikan step. Further, combustion of firewood proceeds rapidly or firewood is burnt up finally, therefore, a change in the temperature over time is large, and it is very difficult to carry out uniform drying in the chamber for the Baikan step. Conventionally, in order to solve such uneven drying, an operation requiring labor in which the positions of products are changed has been carried out.

Further, because incomplete combustion of firewood is carried out, the temperature of the thermal decomposition has a large distribution. Therefore, the resulting smoke has various smells or flavors from a preferable flavor to an unnecessary smell. Due to this, if such a smoke flavor is stuck too much, an unfavorable smell such as a tarry smell becomes strong and an operation such as shaving off of the surface thereof is to be required. Further, in the case where the type of wood to be used for the firewood is the same, the quality of the smoke does not almost change, and it is difficult to control the flavor of smoke. As in the above, in the conventional production process, enormous time and labor have been required to make the quality of product uniform and the flavor thereof favorable.

In the above-mentioned Non-patent document 4, in order to reduce the time for the Baikan step, the Anjou step during drying is omitted and drying is carrying out continuously, whereby the drying time of 70 hours to 80 hours was achieved. However, it cannot be said that the time is sufficiently reduced, and further, there is no description about smoking and the sensory quality of dried and smoked bonito.

Further, in the conventional Baikan method, even if a boiled fish is formed into flakes with a size of 4 cm to 20 cm and the drying time is reduced as disclosed in the Patent document 5, it takes several days to complete the production in order to achieve uniform drying and smoking. If the size of flakes is made very small, it is possible to reduce the drying time, however, the balance of flavors is disrupted.

In the Patent document 6, the Baikan step is divided into a drying step and a smoking step. However, the drying step is carried out at a low temperature and a low humidity after completion of the smoking step, therefore, it takes 13 days to produce dried and smoked bonito in the Examples although it is described that reduction of time was achieved (Fig. 5).

Further, it is known that when the temperature of the thermal decomposition is 425°C or higher, it begins to generate toxic ingredients such as 3,4-benzopyrene, and there are quite a few concerns about an effect on a human body when these smoked foods are taken in a large amount at a time or constantly. In the production of a dried and smoked fish by the conventional method, firewood is used for combustion, therefore, the temperature of the thermal decomposition of firewood when smoke is generated reaches a temperature exceeding far beyond 425°C. In the dried and smoked fish produced in this way, 3,4-benzopyrene is contained. For example, when the concentration of 3,4-benzopyrene in general dried and smoked bonito (Arabishi) was measured, it was 29 ppb.

As in the above, it is very difficult to control the quality of smoke in the conventional smoking device. Further, there are several cases in which a gas discharged from a smoking device is made odorless by combustion and a pyrolysis gas is modified for fuel use, however, a case in which smoke is improved for the purpose of controlling the quality of a smoked food has not yet been known. Further, there has been also a problem that depending on a condition of combustion or thermal decomposition, a toxic ingredient is generated and stuck to a smoked food. In view of the above problems, it is an object of the present invention to develop a process for producing a smoked food capable of imparting a preferable flavor to the food by controlling the quality of smoke and to provide a smoked food with high quality.

In particular, in the conventional process for producing a dried and smoked fish, it is very difficult to complete drying a fish in a short time without generating a fishy smell and to sufficiently attach smoke to the fish. Moreover, as for the smoking, smoke is generated by combustion of firewood in any case, therefore, there have been problems that it cannot be avoided that the dried and smoked fish contains 3,4-benzopyrene and also an unfavorable smell such as a tarry smell is stuck thereto.

In view of the above problems, it is another object of the present invention to provide a process relating to the production of a dried and smoked fish capable of drying a fish in a short time without generating a fishy smell and imparting a favorable smoke flavor to the fish in a short time, and further reducing toxic ingredients such as benzopyrene.

### MEANS TO SOLVE THE PROBLEMS

The present inventors made intensive studies in order to achieve these objects, and as a result, they found that by subjecting smoke generated by combustion, incomplete combustion, or thermal decomposition of a plant material such as a wood material, a bamboo material, a fruit or a flowering plant to secondary heating, the quality of the smoke can be controlled at will, toxic ingredients such as benzopyrene can be reduced, and a favorable flavor can be imparted to a smoked food, and thus the present invention has been completed.

Further, in a process for producing a dried and smoked fish which is a smoked food, the Baikan step was divided into a drying step and a smoking step and the drying was carried out first, and then, the smoking was carried out, whereby it was possible to carry out both drying and smoking under optimal conditions, respectively. Further, it was found that by carrying out drying at a high temperature in a short time, a fishy smell is not generated even not in an atmosphere of smoke, and by carrying out smoking at a low temperature and a high wind speed, a flavor of smoke can be sufficiently imparted in a short time.

The present invention provides the following.
[1] A method for improving a flavor of smoke comprising:
   generating smoke by combustion, incomplete combustion, or thermal decomposition of a plant material; and
   heating said smoke with a secondary heater, wherein a heating temperature by said secondary heater is lower than 800°C but not lower than 300°C.
[2] The method of [1] above, wherein said secondary heater comprises a solid heat medium, which is contacted with said smoke.
[3] The method of [2] above, wherein an additional gas is supplied to said secondary heater.
[4] A process for producing a smoked food comprising, attaching smoke of the flavor improved by the method according to any one of [1] to [3] above to a food.
[5] A process for producing a smoked food comprising:
   carrying out the method of [1] above; and
   contacting the smoke after secondary heating with a food.
[6] The process for producing a smoked food of [4] or [5] above,
   wherein said food is a fish, which is boiled and then dried by hot blast so as to reduce a water content thereof to 30% or less than 30% by mass,
   wherein a temperature of said hot blast is decreased from 120°C or higher than 120°C at the initial drying step, to lower than 120°C at a final drying step, and
   wherein a step of said attaching or contacting the smoke after secondary heating to (or with) the food is keeping the dried fish under an atmosphere of said smoke.
[7] The process for producing a smoked food of [6] above, wherein the temperature of said hot blast is decreased continuously or stepwise from a temperature ranging from 140°C or higher than 140°C to lower than 200°C at the initial drying step, to lower than 120°C at the final drying step.
[8] The process for producing a smoked food of [6] or [7] above, wherein the hot blast used for the drying is an alternate current that is switched regularly.
[9] The process for producing a smoked food of any of [6] to [8] above, wherein said atmosphere of the smoke comprising smoke compositions at a temperature ranging from not lower than 25°C to not higher than 100°C, and wind speed of not slower than 0.5 m/sec.
[10] The process for producing a smoked food of any one of [6] to [9] above, further comprising,
   slicing the boiled fish into 20 to 200 mm long and 5 to 20 mm thick, prior to said drying step.
[11] A smoked food produced by the process of any one of [4] to [10] above.
[12] The smoked food of [11] above, wherein a concentration of 3,4-benzopyrene contained therein is not more than 20 ppb.
[13] A flavor seasoning or food comprising the smoked food of [11] or [12] above or processed food thereof.

That is, a first aspect of the present invention is a method for improving a flavor of smoke characterized by heating the smoke generated by combustion, incomplete combustion, or thermal decomposition of a plant material such as a wood material, a bamboo material, a fruit and a flowering plant, with a secondary heater (hereinafter, sometimes referred to as a "secondary heating unit"). As the plant material, straw, coconut shell, rice husks and the like are also included. In order to completely suppress the production of benzopyrene, the smoke is preferably generated by carrying out the thermal decomposition at a temperature of 425°C or lower, however, when the temperature is raised to around 600°C, the amount of generated smoke is increased, whereby the potency of a smoked food is increased. Further, when the temperature condition of the secondary heating is adjusted to the generated smoke, the variation of flavors is getting wider. However, when the temperature is 600°C or higher, the production of benzopyrene is accelerated, therefore, the temperature of the thermal decomposition is set to 600°C or lower. Further, the temperature of the secondary heating is 300°C or higher and lower than 800°C. More preferably, it is characterized in that the secondary heater includes a solid heat medium and the solid heat medium is brought into contact with the smoke. In one embodiment of the present invention, by supplying an additional gas to the secondary heater, delicate adjustment of the flavor of smoke can be carried out.

A second aspect of the present invention is a process for producing a smoked food, characterized by attaching the smoke with a flavor improved by any one of the above methods to a food. In a preferred embodiment, the process for producing a smoked food comprises generating smoke by combustion, incomplete combustion etc., or thermal decomposition of a wood material; heating the smoke with a secondary heater; and bringing the smoke after secondary heating into contact with a food.

A third aspect of the present invention is a smoked food, characterized by being produced by the above-mentioned process. When the concentration of 3,4-benzopyrene in general dried and smoked bonito (Arabushi) was measured, it was 29 ppb. However, in the smoked food of the present invention, the concentration of 3,4-benzopyrene contained therein is not more than that in the conventional product, preferably not more than 20 ppb, more preferably not more than the detection limit, and a smoked food such as dried and smoked bonito having a variation of various flavors and a favorable flavor is provided.

In particular, in the process for producing a smoked food of the present invention, a boiled fish as a food is dried by hot blast so as to reduce a water content thereof to 30% by mass or less. Here, it is preferred that a temperature of the hot blast is decreased from 120°C or higher at the start of drying to lower than 120°C at the completion of drying, and the smoke components are attached to the fish after drying by keeping the fish under an atmosphere of smoke. A further preferred embodiment is characterized in that the temperature of the hot blast is decreased continuously or stepwise from a temperature of 140°C or higher and lower than 200°C at the start of drying to a temperature of lower than 120°C at the completion of drying. It is further preferred that the hot blast to be used for drying is an alternate current whose current is switched regularly. Another preferred embodiment is characterized in that the atmosphere of smoke includes smoke components in an atmosphere in which a temperature is 25°C or higher and 100°C or lower, and a wind speed is 0.5 m/sec or faster. The smoke components are obtained by heating smoke generated by combustion, incomplete combustion, or thermal decomposition of a plant material at a temperature of 300°C or higher and lower than 800°C with a secondary heater. In one embodiment, the process of the present invention includes a step of slicing the boiled fish into a flake with a length of 20 to 200 mm and a thickness of 5 to 20 mm prior to the drying step.

A fourth aspect of the present invention is a flavor seasoning or a food in which the smoked food produced by the above-mentioned process or a processed product thereof is blended. Examples thereof include seasonings such as extract broth and extract, foods such as soup, pouch-packed food and frozen food.

### MERITORIOUS EFFECTS OF THE INVENTION

According to the method of the present invention, the flavor of smoke can be controlled to have a desired quality, and by using the improved smoke, a preferable flavor can be imparted to a smoked food. Further, it becomes possible to control the flavor of a smoked food without carrying out a secondary process such as attaching molds or ripening. For example, in the case of dried and smoked bonito, a stimulating flavor can be modified into a mild smoke flavor without carrying out an operation such as attaching molds; and in the case of cheese, ham or sausage, a mild smoke flavor can be modified into a stimulating flavor. In this way, by widening the variation of flavors, it is possible to develop and produce a smoked food meeting a wide variety of needs of consumers. Further, it is also possible to reduce toxic ingredients such as benzopyrene in a smoked food.

In particular, according to the process of the present invention, the production time of dried and smoked bonito can be reduced to a large extent, and also the intensity and quality of the flavor of smoke can be modified at will. For example, it is possible to complete the production process within 24 hours, and labor saving and energy saving can be advanced to a large extent. At the same time, it becomes possible to produce dried and smoked bonito with a very strong smoke flavor, which could not be produced by the conventional process in which drying and smoking are carried out simultaneously, by making the condition of smoking optimal. Further, by making the drying condition optimal and carrying out drying in a short time, it is possible to prevent the generation of a fishy smell, and to produce a dried and smoked fish even with a very weak smoke flavor. Further, the flavor of smoke can be controlled to have a desired quality, and when the improved smoke is used, it becomes possible to control the quality of a flavor without carrying out a secondary process such as attaching molds or ripening. In this way, by widening the variation of flavors, it is possible to develop and produce smoked and dried bonito meeting a wide variety of needs of consumers.

### BRIEF DESCRIPTION OF THE DRAWINGS

Fig. 1 is a cross-sectional front view showing the entire structure of a smoking device.
Fig. 2 is a cross-sectional front view showing the entire structure of a smoking device provided with a holding tube and a cooling unit.
Fig. 3 is a cross-sectional front view showing the entire structure of a device for producing a dried and smoked fish
Fig. 4 is a schematic partial cross-sectional side view taken along the line A-A of the device for producing a dried and smoked fish shown in Fig. 3.

### DESCRIPTION OF REFERENCE NUMERALS AND SIGNS

10, 20: Food material to be smoked
11, 21: IH heater
12, 22, 32: Smoke generating unit
13, 23, 33: Electric heater
14, 24: Secondary heating unit
2, 3: Heat exchanger
15, 25: Smoking chamber
4: Drying and smoking unit (chamber)
16, 26: Fresh air inlet
17, 27, 47: Exhaust fan
18, 28: Cooling tube
19, 29: Stainless steel plate
31, 41: Smoking material (oak chips)
42: Holding tube
43: Cooling unit
44: Tray
45, 46: Circulation fan
48: Carbonization tank
DP1, DP2, DP3, DP4, DP5: Damper
T1, T2, T3, T4, T5: Temperature sensor
B1, B2: Burner

### PREFERRED MODES FOR CARRYING OUT THE INVENTION

Hereinafter, the present invention will be described in detail.

The smoked food of the present invention includes dried and smoked fishes such as dried and smoked bonito, dried and smoked bullet tuna, dried and smoked tuna, dried and smoked mackerel, dried and smoked sardine, and dried and smoked horse mackerel; smoked fishes and shell fishes such as dried scallop, smoked salmon, oyster, squid seasoned and smoked products, and smoked fish pastes; smoked domestic animal meat products such as ham, sausage and bacon; smoked dairy products such as smoked cheese and smoked egg. Among these, smoked fish meat products such as dried and smoked fishes are particularly preferred.

A smoking material may be any kind of plant material that does not generate an offensive smell, and any of various plants such as straw, coconut shell and rice husks can be used. However, as the smoking material for fish, oak, beech tree, Japanese chestnut oak or cherry tree is generally used. The form of the material is not particularly limited, however, a material in a form having a larger surface area such as chips or sawdust provides a better efficiency upon thermal decomposition.

Examples of the method for generating smoke include a method in which a smoking material such as firewood, chips, sawdust, smokewood, or another dried plant is ignited, a method in which a smoking material is heated by utilizing a solid matter such as a high temperature electrothermal coil, electric heater or iron plate and radiant heat therefrom, a method in which a smoking material is heated by utilizing a gas such as a high temperature gas or superheated steam, a method in which a smoking material is rubbed with a metal. However, the method in which a smoking material is heated by utilizing a solid matter and radiant heat therefrom is preferably used because in this method, a smoking material is not burned and it is easy to control the temperature to be 425°C or lower so as to suppress the generation of toxic ingredients such as benzopyrene.

Examples of a secondary heating method for improving the flavor of smoke include a heating method utilizing a solid heat medium such as a heat exchanger or an electric heater, a heating method utilizing a gas which does not contain oxygen such as superheated steam or a high temperature inert gas, a heating method utilizing a flame such as a burner, a method in which a gas is burned by introducing a small amount of oxygen and the resulting combustion heat is utilized. However, the heating method utilizing a solid heat medium such as a heat exchanger or an electric heater is preferably used because in this method, an unnecessary reaction such as combustion does not take place, the temperature can be controlled, and the smoke density is not decreased.

In the method of the present invention, it was found that when the temperature of the secondary heating is 300°C or higher, an apparent effect on improving the flavor of smoke is observed and it was found that a sweet smoke flavor is converted into a stimulating smoke flavor as the temperature increases. Further, it was found that an unfavorable smell such as a tarry smell or a woody abnormal flavor is reduced. It is known that when the temperature exceeds 800°C, a low-boiling hydrocarbon is decomposed to an odorless component (JP-A-2005-281552). In fact, although an improvement effect was observed even when the temperature was 700°C, the intensity of overall smoke flavor became weak to a certain degree. Consequently, it was found that when the temperature of the secondary heating for the improvement is 300°C or higher and lower than 800°C, an effect on improving the flavor of smoke is obtained, and it is preferred that the secondary heating is carried out preferably at 400°C to 700°C, more preferably at 500°C to 600°C. The adjustment of the temperature of the secondary heating can be carried out by, for example, installing a temperature sensor such as a thermocouple at a predetermined position in a secondary heating unit and adjusting the output of a heating heater using a temperature indicator controller based on the detection signal of this sensor.

The smoke retention time in the secondary heating is not particularly limited, however, it may be generally about 0.02 sec to 30 sec, preferably 0.1 sec to 3 sec. The smoke retention time can be appropriately adjusted by a method in which the length of a holding tube is changed, the diameter of the holding tube is changed, or the wind speed is changed by changing the opening degree of a damper.

By supplying a predetermined additional gas during this secondary heating, it becomes possible to obtain smoke with a quality which cannot be obtained by simple heating. Examples of the additional gas include a gas to supply oxygen such as oxygen or air; a gas to supply hydrogen such as hydrogen or water vapor; a gas to supply hydrocarbon such as methanol, ethanol, propane, butane, ethylene or acetylene; and in addition to these, nitrogen or argon. A system for supplying such an additional gas is not particularly limited, however, for example, a feed port for the gas is provided at an arbitrary position in the secondary heating unit for smoke and a gas cylinder for supplying oxygen gas or any of a variety of hydrocarbons can be attached via this feed port.

Further, it is possible to modify the quality of smoke by applying a high energy by a light beam with a short wavelength such as ultraviolet light irradiation, or by adding a reaction aid such as a radical, or even by adding a catalyst such as platinum.

Although the details of the mechanism of the improvement of the flavor of smoke by the secondary heating have not been elucidated yet, it is presumed that it is because the methoxy group (-OCH₃) which is one of the functional groups in guaiacols is dissociated or detached by a heat energy or a radical, or a hydroxyl group (-OH) or a methyl group (-CH₃) is introduced, whereby guaiacols are chemically changed into cresols. Incidentally, there are tendencies that guaiacols have a relatively strong sweet smoke flavor and cresols have a strong stimulating smoke flavor. Further, the purpose of the addition of the above-mentioned gas, eradiation of ultraviolet light and addition of the reaction aid or catalyst is to promote this reaction. It is presumed that the mechanism of reducing an unnecessary smell such as a tarry smell is conversion of a high molecular weight hydrocarbon into a low molecular weight compound by the secondary heating.

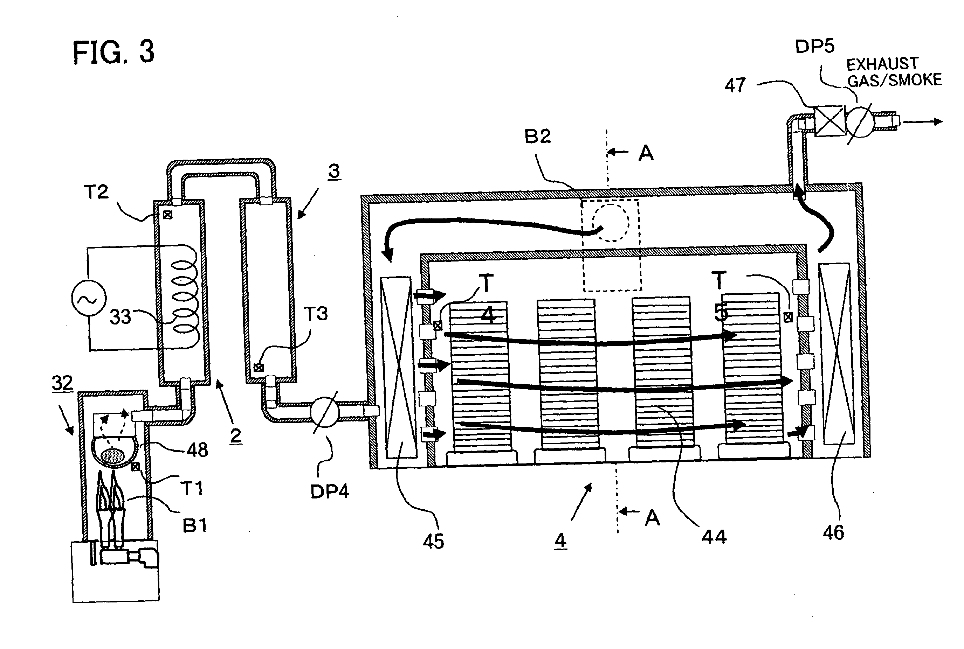

Hereinafter, in particular, a process for producing a dried and smoked fish will be described in detail with reference to the drawings. Fig. 3 is a cross-sectional front view showing the entire structure of a typical smoking device to be used in the process of the present invention. The process can be divided into a step of drying a fish and a step of smoking the fish, and at first, the drying step will be described.

The method for drying a fish is preferably hot blast drying based on the reason that uniform drying can be achieved in the case where multiple breathable trays are stacked as shown in a drying and smoking unit 4 in Fig. 3. It is also possible to combine it with far-infrared drying or high-frequency drying.

As a heat source for drying, any type can be used as long as the temperature can be controlled and it does not impart an abnormal smell to a dried and smoked fish and does not generate toxic ingredients. However, in reality a gas such as LPG or LNG is used in many cases for easy control of the temperature of the drying gas.

In the case where multiple breathable trays are stacked, the current of wind during drying is preferably a parallel current which can achieve uniform drying by passing the wind through the trays. Further, in the case of a batch type, in order to achieve labor saving by eliminating taking out and putting in products, which is generally carried out for the purpose of achieving uniform drying, the current of wind is preferably an alternate current in which the current direction of the parallel current is switched at an appropriate time interval. Also in the case where drying is carried out in a continuous manner, it is preferred that the current direction of the parallel current is switched in some locations in order to achieve uniform drying.

The temperature of the hot blast during drying is preferably as high as possible in order to reduce the drying time. However, when drying at a high temperature is continued, the surface of a boiled fish is overdried, and an unfavorable burnt smell is generated. Due to this, it is necessary to sequentially decrease the drying temperature from the high temperature. As the way of decreasing the temperature, the temperature may be decreased continuously with time (sequentially), or may be decreased stepwise. It is preferred that the temperature at the start of drying is 120°C or higher, more preferably 140°C or higher, further more preferably 160°C or higher. It is also possible to set the temperature at the start of drying to 200°C or higher, however, a burnt smell is liable to be generated, therefore, it is necessary to decrease the temperature promptly. When the temperature of the hot blast is lower than 120°C, a fishy smell remains, and further the drying time becomes long, therefore, it is not preferred.

According to the process of the present invention, drying is completed in a short time, therefore, it is not particularly necessary to prevent the oxidation of lipids in the process. However, smoke may be introduced as a conventional Baikan method, or combustion air may be utilized, or nitrogen replacement can be carried out to reduce the concentration of oxygen in the atmosphere. The water content of a dried and smoked fish at the completion of drying is preferably 30% or less from the viewpoint of prevention of rot or microbial growth, and more preferably 16% or less which is satisfactory as the water content of product.

In the case of a batch type as shown in Fig. 3, the smoking step is preferably carried out in the same place as the drying step without transferring the resulting product from the viewpoint of labor saving. In the case of a continuous process, this shall not necessarily apply.

The smoke flavor decreases when a dried and smoked fish with a smoke flavor is placed under a high temperature even in a short time. Therefore, it is presumed that adsorption and desorption of the smoke components on and from the dried and smoked fish occurs. Based on such an adsorption theory, the temperature of the atmosphere during smoking is preferably a low temperature. In the present method, drying is completed in advance, therefore, it is possible to set the temperature low during smoking fish. There is no problem that the temperature of the atmosphere is around 100°C in the beginning of the smoking step, however, it is preferred that the temperature is decreased to 25°C to 50°C in the end.

The wind speed during smoking is preferably set to a high wind speed rather than limiting to a low wind speed generally used in Baikanko such as 0.2 m/sec or faster to slower than 0.5 m/sec. The wind speed is preferably set to 0.5 m/sec or faster, more preferably 2 m/sec or faster. Based on the above adsorption theory, as the wind speed is faster, an equilibrium state can be achieved in a shorter time, therefore, it is presumed that a high wind speed condition is preferred.

The shape and size of the fish filet are not particularly limited, however, by forming the fish filet into a flake with a long side (the longest side) of 20 mm or more and 200 mm or less and a thickness (the shortest side) of 5 mm or more and 20 mm or less, efficient drying in a short time can be achieved. As the size of the flake, it is more preferred that the long side is 20 mm or more and 100 mm or less and the thickness is 5 mm or more and 15 mm or less. It does not matter even if small flakes of 20 mm or less in length (long side) and 5 mm or less in thickness are included, however, it is preferred that the weight ratio thereof is 20% or less.

By using the above-mentioned techniques, it is possible to complete the drying and smoking steps within 24 hours. If the condition is made optimal, it is also possible to complete drying and smoking within 10 hours.

By attaching the smoke improved in this way to a food, a process for producing a smoked food whose flavor has been improved more is provided. As for a general process for producing a smoked food, a pretreatment of raw materials, salting down (or brining), desalting, washing, draining, air-drying, smoking and finishing are carried out in this order. For example, as a general smoking method, a cold smoking method in which smoking is carried out at a relatively low temperature of 16 to 20°C, a warm smoking method in which smoking is carried out at a temperature range from 25 to 45°C, a hot smoking method in which smoking is carried out at a temperature range from 50 to 90°C can be exemplified, however, it is not limited to these. A quick smoking method in which effective components in the smoke are dissolved in water and a food is dipped in this solution or this solution is sprayed onto a food and then smoking and drying are carried out in a short time can also be used. Further, an electric smoking method in which an electric field is generated in a smoking chamber by applying an electric current of a high voltage so as to promote the attachment of the smoke components to a product is also known.

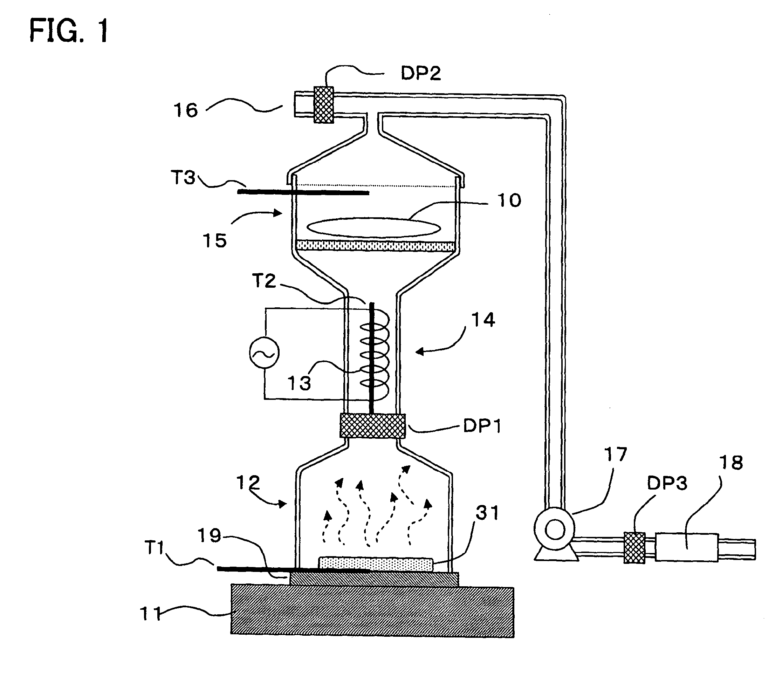

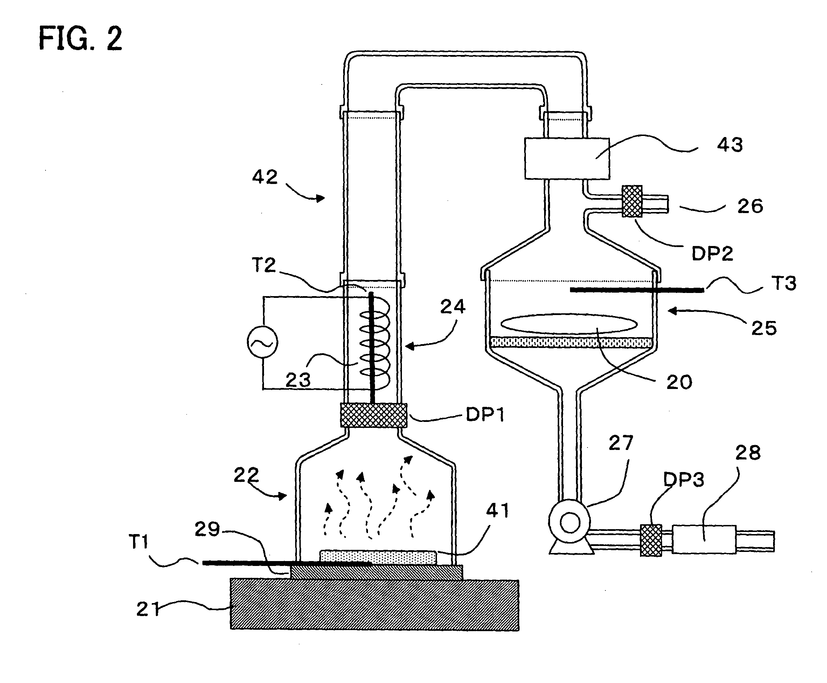

A typical, exemplary embodiment of a smoking device to be used in the present invention will be described with reference to the drawings. Fig. 1 is a cross-sectional front view showing the entire structure of a typical smoking device. This smoking device is composed of a smoke generating unit 12 in which an IH (electromagnetic induction heating) heater 11 is used as a heating source, a secondary heating unit 14 for smoke in which an electric heater 13 is used as a heating source, a smoking chamber 15, a fresh air inlet 16, an exhaust fan 17 and a cooling tube 18. In Fig. 1, the smoke generating unit 12 is provided with the IH heater 11, a stainless steel heating plate 19 and a temperature sensor T1 (which is in contact with the stainless steel heating plate and measures the temperature of a central portion thereof). The secondary heating unit 14 for smoke is provided with a temperature sensor T2 and a damper DP1. The smoking chamber 15 is provided with a temperature sensor T3 (which measures the temperature of the atmosphere of smoke). The fresh air inlet 16 is provided with a damper DP2. The exhaust fan 17 is provided with a damper DP3. The secondary heating unit 14 for smoke is controlled so as to heat smoke at a predetermined temperature by the temperature sensor T2 (which measures the temperature of smoke at an outlet area of the heater). By adjusting the dampers DP1, DP2 and DP3, the pressure for incorporating smoke from the smoke generating unit 12 can be adjusted. Fig. 2 is a cross-sectional front view showing the entire structure of a smoking device provided with a holding tube and a cooling tube of another embodiment according to the present invention. In this device, smoke is cooled to a predetermined temperature by way of a holding tube 42 and a cooling unit 43, and then smoking is carried out in a smoking chamber 25. By changing the length of the holding tube 42, the retention time of smoke at a predetermined heating temperature is adjusted, and the improvement of the flavor of smoke can be controlled.

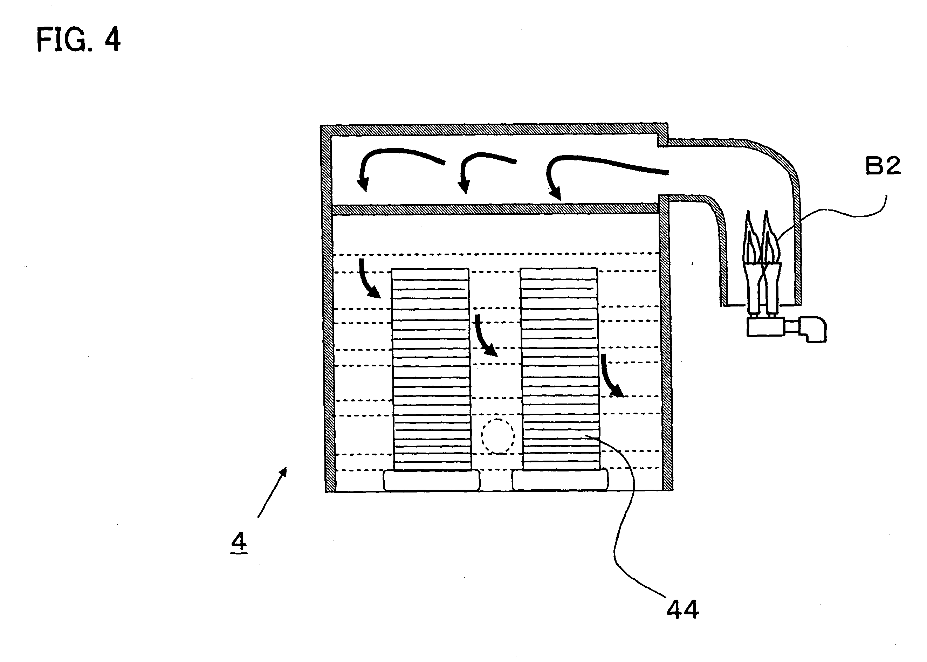

As another exemplary embodiment, a device for producing a dried and smoked fish is shown in Fig. 3 and Fig. 4. This device for producing a dried and smoked fish is composed of a smoke generating unit 32, a secondary heating unit consisting of a heat exchanger 2 which performs secondary heating of smoke, a cooling unit consisting of a heat exchanger 3 which cools smoke and a drying and smoking unit 4. In Fig. 3, the smoke generating unit 32 is provided with a burner B1, a carbonization tank 48 and a temperature sensor T1 (which is in contact with the bottom of the carbonization tank and measures the temperature of a central portion thereof). The heat exchanger 2 which performs secondary heating of smoke is provided with a temperature sensor T2 (which measures the temperature of smoke at an outlet area of the heat exchanger), and the heat exchanger 3 which cools smoke is provided with a temperature sensor T3 (which measures the temperature of smoke at an outlet area of the heat exchanger) and a damper DP4. The drying and smoking unit 4 shown in Fig. 3 and Fig. 4 is provided with circulation fans 45 and 46, an exhaust fan 47, a burner B2 and temperature sensors T4 and T5 (which measure the temperature of the atmosphere of smoke). It is preferred that the circulation fans 45 and 46 are provided with an inverter which adjusts the wind speed or wind direction. The exhaust fan 47 is provided with a damper DP5. The heat exchanger 2 which is a secondary heating unit for smoke is controlled so as to heat smoke at a predetermined temperature by the temperature sensor T2 and an electric heater 33. The heat exchanger 3 which is a smoke cooling unit is controlled so as to cool smoke at a predetermined temperature by the temperature sensor T3. By changing the length or thickness of the heat exchangers for heating and cooling, the flow speed of smoke at the time of heating and cooling smoke or the retention time of smoke can be adjusted. By adjusting the dampers DP4 and DP5, the pressure for incorporating smoke from the smoke generating unit 32 can be adjusted. By switching the operation of the circulation fans 45 and 46 alternately, an alternate current in which the current direction of a parallel current is switched at an appropriate time interval can be generated. It is also possible to generate an alternate current by using one circulation fan and opening and closing the dampers or rotating inversely the circulation fan. By the inverters of the circulation fans 45 and 46, the wind speed at the time of drying and smoking can be adjusted.

Further, the present invention relates to a flavor seasoning, a seasoning such as extract broth or extract or a processed food such as soup, pouch-packed food or frozen food characterized in that a smoked food produced by the above-mentioned process is blended therein. The smoked food may be ground, powdered, formed into paste or other form and commercialized as such, or may be blended in a seasoning or a food. Further, instead of the smoked food as it is, an extract fraction obtained by extraction may be used. As a method for extracting a content from the smoked food thereby to extract the extract fraction, there are a liquefied carbon dioxide extraction method, a supercritical gas extraction method, an alcohol extraction method or a hot water extraction method. The obtained extract fraction can be used in the form of a liquid as it is or a powder after powderization. As a powderization method, there are a vacuum drying method, a freeze drying method, a spray drying method, a drum drying method, a vacuum drum drying method or a microwave drying method. At this time, an excipient may be added as needed. Examples of the excipient to be added include dextrin, lactose, salt, sodium glutamate, granulated sugar and gelatin. Examples

Next, an advantage of the present invention will be described based on specific Examples. In a smoke generating unit 12 in a smoking device shown in Fig. 1, 60 g of oak chips were placed as a smoking material 31, and smoke was generated by controlling the thermal decomposition temperature by an IH heater 11, a heating plate 19 and a temperature sensor T1. In a cooling tube 18, ice water at 0°C was filled and a gas was liquefied, and then a smoke liquid was collected. The resulting smoke liquid was diluted to 50-fold with water, and the top-note was evaluated by 3 skilled examiners. The resulting smoked foods were evaluated in terms of the top-note and flavor by 3 skilled examiners by methods suitable for the respective smoked foods.

The measurement of benzopyrene was entrusted to Japan Food Research Laboratories.

### Example 1: Effect of secondary heating on quality of smoke and amount of benzopyrene

Oak chips were heated at 400°C, and generated smoke was cooled and collected over 20 minutes, whereby 12.0 g of a smoke liquid was obtained. Further, smoke generated in the same manner was subjected to secondary heating at 600°C using a secondary heating unit 14, followed by cooling using a cooling tube 18 and then collecting, whereby 13.2 g of a smoke liquid was obtained.

The results of evaluating the top-note and the results of measuring the amount of benzopyrene are shown in Table 1.

**Table 1**

| With or without secondary heating | Without secondary heating | With secondary heating (set at 600°C) |
|---|---|---|
| Quality of top-note | With a sweet smoke flavor | With a somewhat stimulating smoke flavor |
| Improvement effect | Control | Yes |
| Amount of benzopyrene | Not higher than detection limit (not higher than 0.05 ppb) | Not higher than detection limit (not higher than 0.05 ppb) |

From these results, it was found that the flavor of smoke can be modified by subjecting the smoke to secondary heating. Further, it was found that benzopyrene was not generated by this method.

### Example 2: Effect of temperature of secondary heating

In this Example, in the same manner as in the previous Example, oak chips were heated at 400°C, and generated smoke was subjected to secondary heating at 200°C to 700°C using a secondary heating unit 14, followed by cooling using a cooling tube 18 and then collecting, whereby a smoke liquid was obtained.

The results of evaluating the top-note are shown in Table 2.

**Table 2**

| | Without secondary heating | With secondary heating (°C) | | | | | |
|---|---|---|---|---|---|---|---|
| Temperature of secondary heating | - | 200 | 300 | 400 | 500 | 600 | 700 |
| Intensity of sweet flavor | +++ | +++ | +++ | ++ | ++ | ++ | + |
| Intensity of stimulating flavor | - | - | + | + | ++ | ++ | +++ |
| Intensity of overall flavor | ++ | ++ | ++ | ++ | +++ | +++ | ++ |
| Improvement effect | | No | Yes | Yes | Yes | Yes | Yes |

| | | | | | | | |
|---|---|---|---|---|---|---|---|
| -: Weak +: Somewhat strong ++: Strong +++: Very strong | | | | | | | |

In the case where the temperature of the secondary heating was 200°C, almost no improvement effect was observed. However, as the temperature of the secondary heating increased, a sweet flavor decreased and a stimulating flavor increased.

### Example 3: Changes of the smoke components

GC-MS analysis was carried out for the smoke liquids obtained under the respective conditions of "without secondary heating" and "temperature of secondary heating at 600°C" in Example 2, and the amount of phenols which are typical components of smoke flavor was measured.

### <Analytical instrument>

GC-MS: GC-MATE (BU-20) JEOL Co., Ltd.
Autosampler (pretreatment and injection device): COMBIPAL, GL Science Co., Ltd.

### <Pretreatment for analysis>

The smoke liquid was diluted to 100-fold with water. A 10 ml portion thereof was placed in a 40 ml vial with a septum cap. While heating the vial at 60°C, the SPME fiber (DVB/PDMS) was exposed to the headspace for 30 minutes, whereby the component was adsorbed thereon.

### <GC-MS conditions>

Column: HP-5MS (0.25 mm x 30 M, ID = 0.25 µm)
Injection conditions: temperature: 220°C. mode: splitless, pressure: 1.2 kg/m3·f

Oven conditions: after the temperature was maintained at 50°C for 2 minutes, the temperature was raised at a rate of 5°C/min up to 180°C, followed by at a rate of 50°C/min, and then, the temperature was maintained at 230°C for 5 minutes.

The concentrations of guaiacol and O-cresol, which is considered to be converted from guaiacol are shown in Table 3.

**Table 3**

| Smoke liquid (after dilution) | | |
|---|---|---|
| | Without conversion (secondary heating) | With heating at 600°C |
| Guaiacol | 15976 ppm | 4142 ppm |
| O-cresol | 1361 ppm | 3129 ppm |

From these results, it is considered that a part of guaiacol was converted into cresol, and as a result, a sweet flavor was modified into a stimulating flavor.

### Example 4: Production of dried and smoked bonito

In a smoke generating unit 22 in a smoking device shown in Fig. 2, 60 g of oak chips were placed as a smoking material 41, and smoke was generated by controlling the thermal decomposition temperature by an IH heater 21, a heating plate 29 and a temperature sensor T1. The oak chips were heated at 400°C, and the generated smoke was subjected to secondary heating at 400°C to 700°C using a secondary heating unit 24. In a smoking chamber 25, Namaribushi (boiled and half-dried bonito) which had been dried in advance with an electric hot blast dryer was placed, and smoking was carried out for 3 hours while the temperature of a smoking atmosphere was controlled at 70 to 90°C by a cooling unit 43, whereby dried and smoked bonito was produced by way of trial.

The dried and smoked bonito thus produced was ground using a mixer, and dissolved in a hot aqueous solution to be 1% was prepared and evaluation was carried out. The results are shown in Table 4.

**Table 4**

| Temperature of secondary heating | Without secondary heating | 400°C | 500°C | 600°C | 700°C |
|---|---|---|---|---|---|
| Intensity of sweet flavor | +++ | ++ | + | + | - |
| Intensity of stimulating flavor | - | + | ++ | ++ | +++ |
| Intensity of overall smoke flavor | ++ | ++ | +++ | +++ | ++ |
| Preferability | × With a strong sweet flavor | Δ With a strong somewhat sweet flavor | ○ With a good balance of flavors | ○ With a good balance of flavors | Δ With a strong stimulating flavor |

| | | | | | |
|---|---|---|---|---|---|
| -: Weak +: Somewhat strong ++: Strong +++: Very strong ×: Not preferable Δ: Somewhat preferable ○: Preferable | | | | | |

In the case where the secondary heating was not carried out, a sweet flavor was strong, and the flavor was not suitable for dried and smoked bonito. However, when the secondary heating was carried out, in the same manner as the smoke liquid, a stimulating flavor increased, and the balance of flavors was most favorable and a most preferable flavor was imparted in the case where the secondary heating was carried out at 500°C and 600°C.

### Example 5: Production of smoked cheese

In the same manner as in the previous Example, oak chips were heated at 400°C, and the generated smoke was subjected to secondary heating at 500°C using a secondary heating unit 24. In a smoking chamber 25, commercially available processed cheese was placed and smoking was carried out for 1 hour while the temperature of a smoking atmosphere was controlled at about 30°C by a cooling unit 43, whereby smoked cheese was produced by way of trial.

The smoked cheese thus produced was evaluated. The results are shown in Table 5.

**Table 5**

| Temperature of secondary heating | Without secondary heating | 500°C |
|---|---|---|
| Intensity of sweet flavor | +++ | + |
| Intensity of stimulating flavor | - | ++ |
| Intensity of overall smoke flavor | ++ | +++ |
| Preferability | Δ With a strong sweet flavor | ○ With a good balance of flavors |

| | | |
|---|---|---|
| -: Weak +: Somewhat strong ++: Strong +++: Very strong | | |

Either of the case where the secondary heating was carried out and the case where it was not carried out, a preferable smoke flavor was imparted, however, the balance of a sweet flavor and a stimulating flavor was more favorable and a more preferable flavor was imparted in the case where the secondary heating was carried out at 500°C.

### Example 6: Production of sausage

In the same manner as in the previous Example, oak chips were heated at 400°C, and the generated smoke was subjected to secondary heating at 500°C using a secondary heating unit 24. In a smoking chamber 25, commercially available unsmoked sausage was placed and smoking was carried out for 1 hour while the temperature of a smoking atmosphere was controlled at about 50°C by a cooling unit 43, for the production of sausage.

The sausage thus produced was evaluated. The results are shown in Table 6.

**Table 6**

| Temperature of secondary heating | Without secondary heating | 500°C |
|---|---|---|
| Intensity of sweet flavor | +++ | + |
| Intensity of stimulating flavor | - | ++ |
| Intensity of overall smoke flavor | ++ | +++ |
| Preferability | Δ With a strong sweet flavor | ○ With a good balance of flavors |

| | | |
|---|---|---|
| -: Weak +: Somewhat strong ++: Strong +++: Very strong | | |

Either of the case where the secondary heating was carried out and the case where it was not carried out, a preferable smoke flavor was imparted, however, the balance of a sweet flavor and a stimulating flavor was more favorable and a more preferable flavor was imparted in the case where the secondary heating was carried out at 500°C.

In the following Examples 7 to 12, in a drying and smoking chamber 4 in a device shown in Fig. 3, 100 kg of bonito which was formed into flakes with a long side of 20 mm or more and 100 mm or less and a thickness of 5 mm or more and 15 mm or less after boiling was placed, and drying and smoking were carried out. The resulting dried and smoked bonito was ground and dissolved in a hot aqueous solution to be 1%. Then, the solution was evaluated in terms of the top-note and flavor by 6 skilled examiners.

### Example 7: Effect of drying temperature on drying time and quality

By changing the drying temperature, drying was carried out until the water content of dried and smoked bonito became 30%. The drying time needed and quality are shown in Table 7.

**Table 7 Drying temperature, drying time and quality**

| Initial drying Temp. | Final drying Temp. | Temperature decrease rate | Wind speed | Drying time | Quality | |
|---|---|---|---|---|---|---|
| 200°C | 200°C | Constant temperature | 2 m/sec | 0.5 h | × | With a burnt smell |
| 100°C | 100°C | Constant temperature | 2 m/sec | 9h | × | With a somewhat fish smell |
| 170°C | 140°C | 15°C/h | 2 m/sec | 2h | Δ | With a somewhat burnt smell |
| 170°C | 110°C | 20°C/h | 2 m/sec | 3h | ○ | With a preferable fish meat flavor |

As the drying temperature increased, the drying time decreased, however, when the temperature was too high, a burnt smell was generated, and when the temperature was low, the drying time became long and a fishy smell was generated. By decreasing the temperature from a high temperature of 170°C, drying could be achieved in a short time without generating a burnt smell or fish smell. As the rate of decreasing the temperature, about 20°C/h was appropriate.

### Example 8: Optimal temperature during smoking

A smoking material was subjected to thermal decomposition at 400°C, and smoke was generated. Then, by utilizing the smoke improved at a heating temperature of 600°C and changing the temperature of an atmosphere during smoking, smoking was carried out for 4 hours. The intensity and quality of the smoke flavor are shown in Table 8.

**Table 8**

| Temperature of atmosphere during smoking and intensity and quality of smoke flavor | | |
|---|---|---|
| Temperature during smoking | Intensify of smoke flavor | Quality of smoke flavor |
| At a constant temperature of 50°C | ○ | Δ |
| At a constant temperature of 100°C | × | ○ |
| Gradually decreasing from 100°C to 50°C | ○ | ○ |

At a constant temperature, a smoke flavor was stronger when the temperature was lower. It is presumed that the lower temperature provided a condition in which the smoke components were easily adsorbed on bonito. However, when the temperature was low, a smoky or woody flavor was felt, and when the temperature was 100°C, such a smoky or woody flavor was weak, and the quality of the flavor was preferred. When the temperature was gradually decreased from 100°C to 50°C, a strong smoke flavor with a good quality could be obtained.

### Example 9: Optimal wind speed during smoking

By changing the wind speed during smoking, smoking was carried out for 4 hours. The intensity of smoke flavor is shown in Table 9.

**Table 9**

| Wind speed during smoking and intensity of smoke flavor | |
|---|---|
| Wind speed during smoking | Intensify of smoke flavor |
| 0.2 m/sec | × |
| 0.5 m/sec | Δ |
| 2 m/sec | ○ |

When the wind speed was faster, the smoke flavor was stronger, and 2 m/sec or faster was more preferred. It is presumed that by increasing the wind speed, the bonito and the smoke components reached equilibrium promptly.

### Example 10: Effect of secondary heating of smoke

By changing a temperature of secondary heating for smoke generated at a temperature of thermal decomposition of 400°C, smoking was carried out. The quality of the smoke flavor is shown in Table 10. The temperature of the smoke generated at a temperature of thermal decomposition of 400°C became 200°C before entering the heating unit.

**Table 10**

| Temperature of secondary heating and quality of smoke flavor | | | |
|---|---|---|---|
| Temperature of heat decomposition | Temperature of secondary heating | Quality of smoke flavor | |
| 400°C | Without secondary heating | With a strong tarry smell | × |
| 400°C | 400°C | With a somewhat strong tarry smell and a sweet smoke flavor | × |
| 400°C | 500°C | With a weak tarry smell and a sweet smoke flavor | ○ |
| 400°C | 600°C | Almost no tarry smell and with a somewhat sweet smoke flavor | ⊚ |
| 400°C | 700°C | No tarry smell and with a somewhat stimulating smoke flavor | Δ |

It was possible to reduce an unnecessary tarry smell by the secondary heating, and its effect was more evident as the temperature of the secondary heating was higher. The quality of the smoke flavor was sweeter as the temperature of the secondary heating was lower, and when the temperature was high, the flavor became a stimulating flavor. It is considered that when the temperature of the secondary heating was 800°C, a smoke flavor is almost lost (JP-A-2005-281552).

### Example 11: Production time of dried and smoked bonito

In a drying and smoking chamber 4 in a device shown in Fig. 3, 100 kg of bonito which was formed into flakes after boiling with a long side of 20 mm or more and 100 mm or less and a thickness of 5 mm or more and 15 mm or less was placed, and drying was carried out under a condition in which the temperature at the start of drying was 170°C, the rate of decreasing the temperature was 20°C/h, the temperature was maintained constant after reaching 90°C, and the wind speed was 2.0 m/sec. As a result, the water content thereof became 16% or less in 8 hours. Thereafter, smoking was carried out at a temperature of an atmosphere of 50°C and at a wind speed of 2.0 m/sec with smoke obtained by thermal decomposition of a wood material at 400°C and subjecting the resulting smoke to the secondary heating at 600°C. As a result, a sufficient smoke flavor could be imparted in 2 hours. Consequently, dried and smoked bonito could be produced in 10 hours in total.

The results of evaluating the smoke flavors of the dried and smoked bonito produced in Example 11, Arabushi produced by a general Kyuzokko method and commercially available Karebushi are shown in Table 11. The potency of smoke flavor was represented as a value relative to the smoke flavor of the dried and smoked bonito produced by the present production process, which was set as 1.

**Table 11**

| Quality of dried and smoked bonito produced by the present production process | | | | | | |
|---|---|---|---|---|---|---|
| | Present production process | | Arabushi produced by general Kyuzokko method | | Commercially available Karebishi | |
| Potency of smoke flavor | 1 | ○ | 0.5 | Δ | 0.2 | × |
| Quality of smoke flavor | No tarry smell and with a strong preferable smoke flavor | ○ | With a strong smoke flavor, but with a tarry smell which is stimulating | × | No tarry smell, but with a weak smoke flavor | ○ |

The dried and smoked bonito produced by the present production process had a strong and preferable smoke flavor even though the production time was 10 hours, which was short.

### Example 12: Content of benzopyrene

The contents of benzopyrene of the dried and smoked bonito produced in Example 11 and Arabushi produced by a general Kyuzokko method are shown in Table 12. The measurement method was in accordance with the method described in "Kako Shokuhin chuno Takan Hokozoku Tankasuiso no Bunseki Hoho no Kento (keizoku) (Investigation of Analytical Method for Polycyclic Aromatic Hydrocarbons in Processed Food (continued))" Tokyo Center for Quality Control and Consumer Service, Ministry of Agriculture, Forestry and Fisheries of Japan, written by Keiko Kinoshita, pages 23-34.

**Table 12**

| | Present production process | Arabushi produced by general Kyuzokko method |
|---|---|---|
| Content of benzopyrene | 4 ppb | 29 ppb |

In the dried and smoked bonito produced according to the present production process, the content of benzopyrene was reduced to a large extent while it had a strong preferable smoke flavor.

According to the present invention, by controlling the quality of smoke, a preferable flavor can be appropriately imparted to a food, and toxic ingredients such as benzopyrene can be reduced, therefore, the present invention is useful in a field of food. Further, by independently carrying out drying and smoking under an optimal condition, it is possible to achieve the reduction of the production time, and by controlling the quality of smoke, it is possible to appropriately impart a preferable flavor to a food.

## Claims

1. A method for improving a flavor of smoke comprising:
generating smoke by combustion, incomplete combustion, or thermal decomposition of a plant material; and
heating said smoke with a secondary heater, wherein a heating temperature by said secondary heater is lower than 800°C but not lower than 300°C.

2. The method of claim 1, wherein said secondary heater comprises a solid heat medium, which is contacted with said smoke.

3. The method of claim 2, wherein an additional gas is supplied to said secondary heater.

4. A process for producing a smoked food comprising, attaching smoke of the flavor improved by the method according to any one of claims 1 to 3 to a food.

5. A process for producing a smoked food comprising:
carrying out the method of claim 1; and
contacting the smoke after secondary heating with a food.

6. The process for producing a smoked food of claim 4 or 5,
wherein said food is a fish, which is boiled and then dried by hot blast so as to reduce a water content thereof to 30% or less than 30% by mass,
wherein a temperature of said hot blast is decreased from 120°C or higher than 120°C at the initial drying step, to lower than 120°C at a final drying step, and
wherein a step of said attaching or contacting the smoke after secondary heating to (or with) the food is keeping the dried fish under an atmosphere of said smoke.

7. The process for producing a smoked food of claim 6, wherein the temperature of said hot blast is decreased continuously or stepwise from a temperature ranging from 140°C or higher than 140°C to lower than 200°C at the initial drying step, to lower than 120°C at the final drying step.

8. The process for producing a smoked food of claim 6 or 7, wherein the hot blast used for the drying is an alternate current that is switched regularly.

9. The process for producing a smoked food of any of claims 6 to 8, wherein said atmosphere of the smoke comprising smoke compositions at a temperature ranging from not lower than 25°C to not higher than 100°C, and wind speed of not slower than 0.5 m/sec.

10. The process for producing a smoked food of any one of claims 6 to 9, further comprising,
slicing the boiled fish into 20 to 200 mm long and 5 to 20 mm thick, prior to said drying step.

11. A smoked food produced by the process of any one of claims 4 to 10.

12. The smoked food of claim 11, wherein a concentration of 3,4-benzopyrene contained therein is not more than 20 ppb.

13. A flavor seasoning or food comprising the smoked food of claim 11 or 12 or processed food thereof.

## Patentansprüche

1. Verfahren zum Verbessern des Aromas von Rauch, welches umfasst:
das Erzeugen von Rauch durch Verbrennung, unvollständige Verbrennung oder thermische Zersetzung eines Pflanzenmaterials; und
das Erhitzen des Rauchs mit einem sekundären Heizer, wobei die Heiztemperatur durch den sekundären Heizer niedriger als 800°C, jedoch nicht niedriger als 300°C ist.

2. Verfahren nach Anspruch 1, wobei der sekundäre Heizer ein festes Heizmedium umfasst, das mit dem Rauch kontaktiert wird.

3. Verfahren nach Anspruch 2, wobei ein zusätzliches Gas in den sekundären Heizer gegeben wird.

4. Verfahren zum Herstellen eines geräucherten Nahrungsmittels, welches das Anhaften von Rauch mit dem durch das Verfahren nach einem der Ansprüche 1 bis 3 verbesserten Aroma an ein Nahrungsmittel umfasst.

5. Verfahren zum Herstellen eines geräucherten Nahrungsmittels, welches umfasst:
das Durchführen des Verfahrens nach Anspruch 1; und
das Kontaktieren des Rauchs nach dem sekundären Heizen mit einem Nahrungsmittel.

6. Verfahren zum Herstellen eines geräucherten Nahrungsmittels nach Anspruch 4 oder 5,
wobei das Nahrungsmittel ein Fisch ist, der gekocht und dann mit einem Heißwind getrocknet wird, so dass der Wassergehalt auf 30 % oder weniger als 30 Massen-% verringert ist,
wobei die Temperatur des Heißwindes von 120°C oder höher als 120°C in der Trocknungsanfangsstufe auf weniger als 120°C in einer Trocknungsendstufe verringert wird und
worin eine Stufe des Anhaftens oder des Kontaktierens des Rauchs nach dem sekundären Heizen an das oder mit dem Nahrungsmittel darin besteht, dass der getrocknete Fisch unter einer Atmosphäre des Rauches gehalten wird.

7. Verfahren zum Herstellen eines geräucherten Nahrungsmittels nach Anspruch 6, wobei die Temperatur des Heißwindes kontinuierlich oder stufenweise von einer Temperatur im Bereich von 140°C oder höher als 140°C auf weniger als 200°C in der Trocknungsanfangsstufe auf weniger als 120°C in der Trocknungsendstufe verringert wird.

8. Verfahren zum Herstellen eines geräucherten Nahrungsmittels nach Anspruch 6 oder 7, wobei der für das Trocknen verwendete Heißwind ein regelmäßig umgeschalteter Wechselstrom ist.

9. Verfahren zum Herstellen eines geräucherten Nahrungsmittels nach einem der Ansprüche 6 bis 8, wobei die Rauchzusammensetzungen enthaltende Atmosphäre des Rauchs eine Temperatur im Bereich von nicht weniger als 25°C bis nicht höher als 100°C aufweist und die Windgeschwindigkeit nicht niedriger als 0,5 m/sec ist.

10. Verfahren zum Herstellen eines geräucherten Nahrungsmittels nach einem der Ansprüche 6 bis 9, welches außerdem die Stufe umfasst, in der der gekochte Fisch vor der Trocknungsstufe in 20 bis 200 mm lange und 5 bis 20 mm dicke Scheiben geschnitten wird.

11. Durch das Verfahren nach einem der Ansprüche 4 bis 10 hergestellte geräucherte Nahrungsmittel.

12. Geräuchertes Nahrungsmittel nach Anspruch 11, wobei die Konzentration von darin enthaltenem 3,4-Benzpyrin nicht mehr als 20 ppb ist.

13. Aromawürzmittel oder Nahrungsmittel, welches das geräucherte Nahrungsmittel nach Anspruch 11 oder 12 oder ein verarbeitetes Nahrungsmittel davon umfasst.

## Revendications

1. Procédé d'amélioration d'un arôme de fumée comprenant :
la production de fumée par combustion, combustion incomplète, ou décomposition thermique d'un matériau de plante ; et
le chauffage de ladite fumée avec un dispositif de chauffage secondaire, dans lequel une température de chauffage par ledit dispositif de chauffage secondaire est inférieure à 800°C mais n'est pas inférieure à 300°C.

2. Procédé selon la revendication 1, dans lequel ledit dispositif de chauffage secondaire comprend un milieu de chauffage solide, qui est mis en contact avec ladite fumée.

3. Procédé selon la revendication 2, dans lequel un gaz supplémentaire est introduit dans ledit dispositif de chauffage secondaire.

4. Procédé de production d'un aliment fumé comprenant la fixation de fumée de l'arôme améliorée par le procédé selon l'une quelconque des revendications 1 à 3 à un aliment.

5. Procédé de production d'un aliment fumé comprenant :
la réalisation du procédé selon la revendication 1 ; et
la mise en contact de la fumée après un chauffage secondaire avec un aliment.

6. Procédé de production d'un aliment fumé selon la revendication 4 ou 5, dans lequel ledit aliment est un poisson, qui est bouilli et ensuite séché par un vent chaud afin de réduire sa teneur en eau à 30 % ou à moins de 30 % en masse,
dans lequel une température dudit vent chaud est abaissée de 120°C ou plus de 120°C dans l'étape de séchage initiale, jusqu'à moins de 120°C dans une étape de séchage finale, et
dans lequel une étape de ladite fixation ou mise en contact de la fumée après un chauffage secondaire à (ou avec) l'aliment consiste à maintenir le poisson séché sous une atmosphère de ladite fumée.

7. Procédé de production d'un aliment fumé selon la revendication 6, dans lequel la température dudit vent chaud est abaissée en continu ou par étape à partir d'une température comprise allant de 140°C ou plus de 140°C à moins de 200°C dans l'étape de séchage initiale, jusqu'à moins de 120°C dans l'étape de séchage finale.

8. Procédé de production d'un aliment fumé selon la revendication 6 ou 7, dans lequel le vent chaud utilisé pour le séchage est un courant alterné qui est régulièrement commuté.

9. Procédé de production d'un aliment fumé selon l'une quelconque des revendications 6 à 8, dans lequel ladite atmosphère de la fumée comprend des compositions de fumée à une température allant d'au moins 25°C jusqu'au plus 100°C, et la vitesse du vent n'est pas inférieure à 0,5 m/s.

10. Procédé de production d'un aliment fumé selon l'une quelconque des revendications 6 à 9, comprenant de plus, le tranchage du poisson bouilli dans une longueur de 20 à 200 mm et une épaisseur de 5 à 20 mm, avant ladite étape de séchage.

11. Aliment fumé produit par le procédé selon l'une quelconque des revendications 4 à 10.

12. Aliment fumé selon la revendication 11, dans lequel une concentration en 3,4-benzopyrène contenu dans celui-ci n'est pas supérieure à 20 ppb.

13. Assaisonnement ou aliment aromatisé comprenant l'aliment fumé selon la revendication 11 ou 12 ou un aliment transformé de celui-ci.
